**Europäisches Patentamt**

**European Patent Office**

**Office européen des brevets**

(19)

(11) Publication number : **0 343 165 B1**

(12)

# EUROPEAN PATENT SPECIFICATION

(45) Date of publication of patent specification :
20.05.92 Bulletin 92/21

(51) Int. Cl.⁵ : **G01M 1/12**

(21) Application number : **88900170.7**

(22) Date of filing : **16.11.87**

(86) International application number :
**PCT/US87/02984**

(87) International publication number :
**WO 89/04954 01.06.89 Gazette 89/12**

(54) **CENTER OF GRAVITY FIXTURE.**

(43) Date of publication of application :
29.11.89 Bulletin 89/48

(45) Publication of the grant of the patent :
20.05.92 Bulletin 92/21

(84) Designated Contracting States :
**DE FR GB IT NL**

(56) References cited :
**DE-C- 387 093**
**FR-A- 2 564 972**
**US-A- 2 103 811**
**US-A- 3 174 330**
**US-A- 3 320 794**
**Soviet Inventions Illustrated Derwent, week
8520, published 26 June 1985, (London, GB) &
SU-A-1120195**

(73) Proprietor : **HONEYWELL INC.**
**Honeywell Plaza**
**Minneapolis MN 55408 (US)**

(72) Inventor : **SCHUELLER, Gerald, W.**
**10013 Little Road**
**Bloomington, MN 55437 (US)**

(74) Representative : **Rentzsch, Heinz et al**
**Honeywell Europe S.A. Holding KG Patent-
und Lizenzabteilung Postfach 10 08 65**
**W-6050 Offenbach am Main (DE)**

Jouve, 18, rue Saint-Denis, 75001 PARIS

## Description

This invention relates generally to the field of munitions, and particularly to an apparatus for use in inspection of marine torpedoes during and after manufacture.

## BACKGROUND OF THE INVENTION

It has been found that a check on the longitudinal location of the transverse plane containing the center of gravity of an assembled torpedo is very informative as to whether the assembly steps in manufacturing the torpedo have been performed properly. If the center of gravity is not where it is expected, as may be indicated by a mark on the outside of the torpedo, there is a strong likelihood of manufacturing error. Also, air-launched torpedoes are supported in standard fashion in launching aircraft, and any mislocation of the center of gravity of so large a mass can have a significant effect on the flight of the aircraft. Furthermore, a mislocation of the center of gravity has an undesirable effect on the motion of the torpedo when in the water.

Accordingly, it is desirable to check assembled torpedoes to determine the locations of their centers of gravity. An apparatus for accomplishing this determination comprises the subject matter of the present invention.

Previous center of gravity arrangements such as those of U.S. Patents 3,225,590 and 3,037,376 are known, but require awkward suspensions, repetitive weighings and complex computations, which are time consuming and subject to error; the present invention obviates these difficulties.

It is known that if an elongated body is supported at a site transversely aligned with its center of gravity, the body will balance, while if the support is not so aligned the body tips in a direction toward its center of gravity (see US-A-3 174 330). The invention makes use of this principle by supporting the torpedo pendulously while enabling it to be moved axially until a point of balance is reached, so that the location of the center of gravity is thereby determined.

DE-A 387 093 shows an apparatus according to the preamble of claim 1 for determining the location of the center of gravity of an elongated projectile. The projectile is inserted into a hollow bushing and is fixed therein by clamping means. The axis of the bushing and of the projectile coincide. The bushing has two opposite transversal supporting studs whose diameter is the same as the diameter of the projectile. The frame carries two pairs of rollers which are located spaced apart such that their rotational axes extend in parallel to the pivot axis of the frame.

For determining the longitudinal plane containing the center of gravity the projectile is supported by said roller means such that the longitudinal axis of the projectile is in alignment with the pivotal axis of the frame. A pointer fixed to said bushing cooperates with a stationery dial. The projectile is rotated on said rollers around its longitudinal axis until said pointer reaches the central zero position indicating that the center of gravity lies within the vertical plane extending along the axis of the projectile.

For determining the transverse plane containing the center of gravity the projectile together with said bushing is lifted from said roller means and is turned around 90° in a horizontal plane such that now the roller means support the radio studs of the bushing. The axis of the projectile now extends rectangularly with respect to the pivot axis of the frame. As long as the center of gravity of the projectile is not located in the transverse plane of the bushing located halfway between the two roller means, the projectile will be unbalanced with either nose-up or nose-down. The clamping fixture now is loosened, and the projectile is moved longitudinally within the bushing, is again clamped within the bushing and the unbalance is measured. This step is repeated until the transverse plane containing the center of gravity of the projectile coincides with the transverse center plane of the bushing. This stepwise procedure of clamping the projectile within the bushing, measuring the unbalance, loosening the clamping, moving the projectile with respect to the bushing, clamping it again and measuring the status of balance is a time-consuming procedure.

From Soviet Invention Illustrated Derwent, week 8520, published 26 June 1985, (London, GB) & SU, A, 1120195 (Gorbikov N.N.) 23. Oktober 1984, an apparatus for determining the center of gravity of elongated articles is known in which the article rests on a stationery support and can be lifted from this support by a shaft which is supported by a fork-shaped frame. When the elongated body is lifted, it only bears on said shaft and therefore is tilted around the shaft depending on the misplacement of the center of gravity. The shaft can be rotated by means of a handle fixed to said shaft, therewith moving the elongated body along its longitudinal axis. As soon as the balanced position is reached, the body is provided with a marking at its circumference at the position of the transversal plane containing the center of gravity. For this purpose the fork-shaped frame includes an upright arm projecting across the topside of the elongated body and containing a hole through which such marking can be applied to the outside of the body.

A typical torpedo is over 300 mm (1 foot) in diameter and 2.4 m (8 feet) long, and weighs 320 - 360 kg (700-800 pounds). Thus, it cannot be easily handled manually. According to the present invention, a torpedo is simply placed by a crane into a test fixture which thereafter does all manipulation of the torpedo necessary to the determination of in question.

Accordingly, it is an object of the invention to provide a fixture for pendulously receiving an elongated body such as a torpedo and facilitating its axial displacement to enable the determination of the axial location of the plane orthogonal to the body's longitudinal axis and containing the body's center of gravity.

Various features of novelty which characterize the invention are pointed out with particularity in the claims annexed hereto and forming a part hereof. However, for a better understanding of the invention, its advantages, and objects attained by its use, reference should be had to the drawing which forms a further part hereof, and to the accompanying descriptive matter, in which there is illustrated and described a preferred embodiment of the invention.

BRIEF DESCRIPTION OF THE DRAWINGS

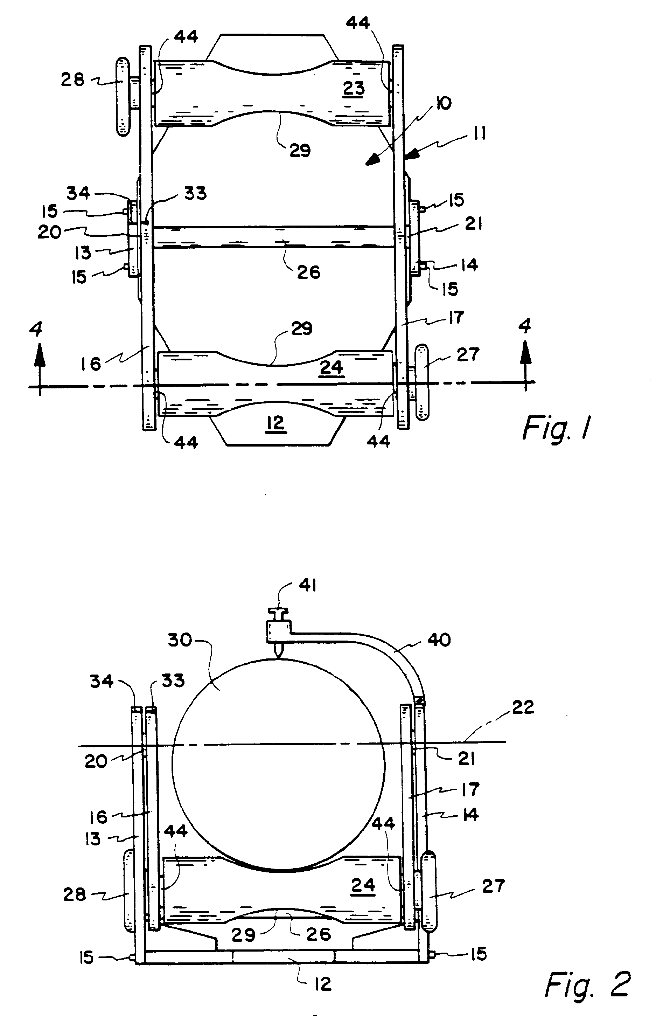

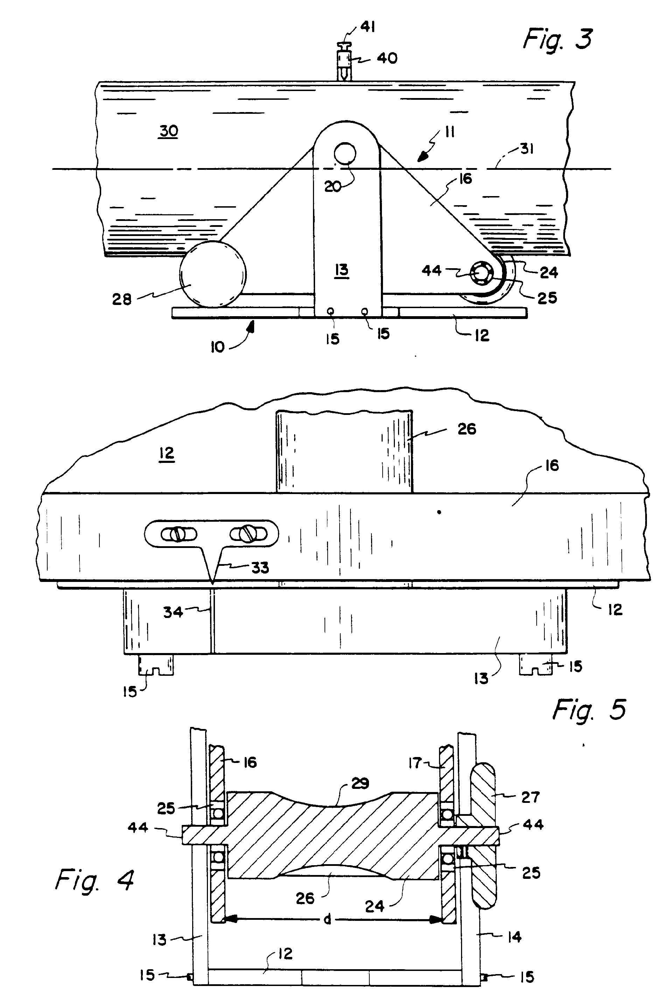

In the drawing, Figure 1 is a plan view of a fixture according to the invention, while Figure 2 is an end view. Figure 3 is a side view, suggesting the location of a torpedo in the fixture. Figure 4 is a vertical section along the line 4-4 of Figure 1, and Figure 5 shows details of the level indicator.

DESCRIPTION OF THE PREFERRED EMBODIMENT

As shown in the drawings, the fixture of the invention comprises a base 10 and a cradle 11. Base 10 includes a base plate 12 to which a pair of spaced supports 13 and 14 are attached as by bolts 15, to extend vertically therefrom. Base 10 and plate 12 are parallel to a horizontal plane orthogonal to the vector of the earth's gravitational force. Cradle 11 comprises a pair of triangular side plates 16 and 17 having transversely coaxial low-friction bearings 20 and 21 at the upper vertices of plates 16 and 17 by which they are pivotally connected to the tops of cradle supports 13 and 14, all respectively, so that cradle 11 is pendulously supported for rotation about the common transverse axis 22 of bearings 20 and 21.

Plates 16 and 17 of cradle 11 are laterally spaced by a distance "d" as noted in Figure 4. Distance "d" is greater than the torpedo diameter. Plates 16 and 17 are interconnected by a pair of rollers 23 and 24 at their lower vertices carried in low-friction bearings 25, and also by an intermediate cross member 26. Bearings 25 are press fit onto shafts 44 of rollers 23 and 24 and into plates 16 and 17. The axes of the rollers 23 and 24 are substantially parallel to the axis 22 of bearings 20 and 21. Shaft 44 of roller 24 is extended beyond plate 17 to carry a knob 27 by which the roller may be manually rotated, in its low-friction bearings 25, and the shaft 44 of roller 23 extends beyond plate 16 to carry a similar but fixed knob 28 as a counter balance. Each roller, 23 and 24, is provided with a central, curved indentation or groove 29 onto which a torpedo 30 may be laid so that its longitudinal axis 31 extends orthogonally to the axes of rollers 23 and 24, and to the common axis 22 of bearings 20 and 21.

Cradle 11 is constructed to be pendulous about axis 22, whether empty or carrying a torpedo, and is arranged so that when the cradle is empty and base plate 12 is level, i.e., orthogonal to the vector of gravity, the axes of rollers 23 and 24 define a plane which is also level. Side plate 16 carries a pointer or index 33 which moves with respect to a mark or index 34 on support 13 to indicate any departure of cradle 11, i.e., the plane defined by the axes of rollers 23 and 24, from a level position. Pointer or index 33 may be moved relative to plate 16 for adjustment or calibration.

In order to correlate the use of the invention with the actual structure of a torpedo in the fixture, an arm 40 may be removably or pivotally secured to the top of support 14, to hold a sighting or marking device 41, which is used to align with a center of gravity indication on the torpedo or to make a center of gravity indication, when the torpedo 30 has been balanced.

In use, base 10 is placed on any surface; at this point, index 33 is aligned with index 34 when cradle 11 is empty. Then the fixture is ready for use. Torpedo 30 is lowered by a crane into the cradle 11 to rest on grooves 29 in rollers 23 and 24, and released. If the center of gravity to the torpedo 30 is then located in a vertical plane orthogonal to the longitudinal axis 31 and containing axis 22, cradle 11 will not tilt, as indicated at index 34. But ordinarily, to begin with, torpedo 30 causes cradle 11 to tilt in one direction or the other. Knob 27 is then manually operated to rotate roller 23 in a direction to move the torpedo 30 axially toward its higher end, the other roller also rotating under and supporting torpedo 30. As torpedo 30 moves, cradle 11 tilts toward its normal level position: when index 33 is aligned with index 34 indicating that the level position has been reached and the center of gravity of torpedo 30 is in the vertical plane containing axis 22.

If torpedo 30 carries a mark indicating the intended location of the center of gravity, this mark should now be in line with a sighting device at 41. If torpedo 30 does not carry such a mark, a marking device at 41 may be operated to place a suitable mark on the torpedo 30 surface.

In actual use of the apparatus it has been found that a linear movement of the torpedo along its longitudinal axis 31 by as little as 0,5 mm (twenty thousandths of an inch) results in a perceptible tilting of the assembly of cradle 11 and torpedo 30. Thus, the arrangement is clearly very accurate.

A number of characteristics and advantages of the invention have been set forth in the foregoing description, together with details of the structure and function of the invention, and the novel features thereof are pointed out in the appended claims. The disclosure, however, is illustrative only, and changes may be made in details, especially in matters of shape, size, and arrangement of parts, within the principle of the invention, to the full extent indicated by the broad general meaning of the terms in which the appended claims are expressed.

## Claims

1. An apparatus for determining the transverse plane containing the center of gravity of an elongated body (30) comprising
   a) support frame means (11) supporting said elongated body (30);
   b) base means (10) for supporting said frame means pivotally about a pivotal axis (22);
   c) first and second roller means (23, 24) carried by said frame means (11) for receiving and supporting said elongated body (30);
   said body (30) having rolling contact with said roller means (23, 24);
   **characterized in that**
   d) said frame means is a cradle (11) for pendulously supporting said body (30) for tilting about said pivotal axis (22);
   e) the rotational axes of said first and second roller means (23, 24) are located parallel to each other at the bottom portion of said cradle (11) and extend in parallel to said pivotal axis (22) of said cradle (11) and rectangularly with respect to the longitudinal axis (31) of said body (30);
   f) said first roller means (24) comprises a manually actuable means (27) for rotating that first roller and in turn longitudinally moving said elongated body (30) for said center of gravity determination.

2. The apparatus of claim 1, **characterized in that** said first roller (24) has a varying diameter dimension, said dimension having a maximum magnitude toward each end of said first roller and said dimension having a minimum magnitude equidistant from said ends, said first roller having a shape conforming to a shape of said supported elongated body (30) so that said body is stabilized in its position along an axis parallel to said pivotal axis (22).

3. The apparatus of claim 2, **characterized in that** said second roller (24) has a varying diameter dimension, said dimension having a maximum magnitude toward each end of said second roller and said dimension having a minimum magnitude equidistant from said ends, said second roller having a shape conforming to a shape of said supported elongated body (30) so that said body is stabilized in its position along an axis parallel to said pivotal axis (22).

## Patentansprüche

1. Vorrichtung zum Bestimmen der Schwerpunktsquerebene eines langgestreckten Körpers (30) mit
   a) einem Tragrahmen (11) für den langgestreckten Körper (30);
   b) einer Grundplatte (10), welche den Tragrahmen um eine Schwenkachse (22) kippbar trägt;
   c) vom Tragrahmen (11) gehaltenen ersten und zweiten Rollen (23, 24) zur Aufnahme und Abstützung des langgestreckten Körpers (30), der in Rollkontakt auf den Rollen (23, 24) aufliegt;
   **dadurch gekennzeichnet, daß**
   d) der Tragrahmen eine um die Schwenkachse (22) schwenkbare Wiege (11) zur pendelnden Aufhängung des Körpers (30) ist;
   e) die Drehachsen der ersten und zweiten Rollen (23, 24) parallel zueinander am Bodenteil der Wiege (11) angeordnet sind und sich parallel zur Schwenkachse (22) der Wiege (11) sowie rechtwinkelig zur Längsachse (31) des Körpers (30) erstrecken:
   f) die erste Rolle (24) eine Handbetätigungseinrichtung (27) zum Drehen der ersten Rolle aufweist, um hierdurch den langgestreckten Körper (30) zum Zwecke seiner Schwerpunktbestimmung in Längsrichtung zu bewegen.

2. Vorrichtung nach Anspruch 1, **dadurch gekennzeichnet,** daß die erste Rolle (24) einen sich längs ihrer Achse ändernden Durchmesser hat, der an den beiden Enden der ersten Rolle am größten und an einer gleich weit von beiden Enden entfernten Stelle am geringsten ist, wobei die Kontur der ersten Rolle der Form des gehaltenen langgestreckten Körpers (30) angepaßt und damit der Körper in seiner Lage längs einer zur Schwenkachse (22) parallelen Achse stabilisiert ist.

3. Vorrichtung nach Anspruch 2, **dadurch gekennzeichnet,** daß die zweite Rolle (23) einen sich längs ihrer Achse ändernden Durchmesser hat, der an den beiden Enden der zweiten Rolle am größten und an einer gleich weit von beiden Enden entfernten Stelle am geringsten ist, wobei die Kontur der zweiten Rolle der Form des gehaltenen langgestreckten Körpers (30) angepaßt und damit der Körper in seiner Lage längs einer zur Schwenkachse (22) parallelen Achse stabilisiert ist.

## Revendications

1. Dispositif de détermination du plan transversal qui contient le centre de gravité d'un corps allongé (30), comprenant :
   a) un moyen de châssis de support (11) qui supporte ledit corps allongé (30) ;
   b) un moyen de base (10) pour supporter ledit moyen de châssis de manière pivotante autour d'un axe de pivotement (22) ;

c) des premier et second moyens de rouleau (23, 24) portés par ledit moyen de châssis (11) pour recevoir et supporter ledit corps allongé (30) ; ledit corps (30) ayant un contact de roulement avec ledit moyen de rouleau (23, 24) ; caractérisé en ce que :

d) ledit moyen de châssis est un berceau (11) pour supporter de manière pendulaire ledit corps (30) afin de le basculer par rapport audit axe de pivotement (22) ;

e) les axes de rotation desdits premier et second moyens de rouleau (23, 24) sont positionnés parallèlement l'un à l'autre à la partie de base dudit berceau (11) et s'étendent parallèlement audit axe de pivotement (22) dudit berceau (11) et perpendiculairement à l'axe longitudinal (31) dudit corps (30) ;

f) ledit premier moyen de rouleau (24) comprend un moyen actionnable à la main (27) pour faire tourner ce dit premier rouleau et pour déplacer à son tour longitudinalement ledit corps allongé (30) pour ladite détermination de centre de gravité.

2. Dispositif selon la revendication 1, caractérisé en ce que ledit premier rouleau (24) a une dimension de diamètre variable,ladite dimension ayant une valeur maximale vers chaque extrémité dudit premier rouleau et ladite dimension ayant une valeur minimale à équidistance desdites extrémités, ledit premier rouleau ayant une forme qui se conforme à une forme dudit corps allongé supporté (30) de telle sorte que ledit corps est stabilisé dans sa position le long d'un axe parallèle audit axe de pivotement (22).

3. Dispositif selon la revendication 2, caractérisé en ce que ledit second rouleau (24) a une dimension de diamètre variable, ladite dimension ayant une valeur maximale vers chaque extrémité dudit second rouleau et ladite dimension ayant une valeur minimale à équidistance desdites extrémités, ledit second rouleau ayant une forme qui se conforme à une forme dudit corps allongé supporté (30) de telle sorte que ledit corps est stabilisé dans sa position le long d'un axe parallèle audit axe de pivotement (22).

*Fig. 1*

*Fig. 2*

*Fig. 3*

*Fig. 5*

*Fig. 4*